Europäisches Patentamt

European Patent Office

Office européen des brevets

(11) Publication number: **0 525 591 A1**

## EUROPEAN PATENT APPLICATION

(21) Application number: **92112448.3**

(22) Date of filing: **21.07.92**

(51) Int. Cl.5: **C21C 7/072**, C04B 38/06, F27D 3/16, B22D 1/00

(30) Priority: **29.07.91 JP 67286/91 U**

(43) Date of publication of application:
**03.02.93 Bulletin 93/05**

(84) Designated Contracting States:
**DE FR GB IT**

(71) Applicant: **TOKYO YOGYO KABUSHIKI KAISHA**
**Tekko Building, 8-2, 1-chome, Marunouchi**
**Chiyoda-ku, Tokyo(JP)**

(72) Inventor: **Okumura, Tomohiro**
**841, Tsukiyoshi, Akiyo-cho**
**Mizunami City, Gifu Pref.(JP)**
Inventor: **Aramaki, Keizo**
**26-1, Oohora, Oohata-cho**
**Taijimi City, Gifu Pref.(JP)**

(74) Representative: **Henkel, Feiler, Hänzel &**
**Partner**
**Möhlstrasse 37**
**W-8000 München 80(DE)**

(54) **Plug for molten metal refining vessel.**

(57) A plug (A) for a molten metal refining vessel, which comprises: a plug body (1) to be releasably attached to an opening provided in a wall of a molten metal refining vessel, the plug body comprising a non-porous refractory with a porosity of up to 20%; and a plurality of gas blowing apertures (2) formed in the plug body (1) and running through the plug body (1) in the axial direction thereof. Each of the above-mentioned plurality of gas blowing apertures (2) comprises a slit, and the slit has substantially a rectangular shape having a length of the shorter side thereof within a range of from 0.08 to 0.25 mm. Each gas blowing aperture (2) should preferably have a cross-sectional area of at least 2 mm$^2$, and the total amount of the cross-sectional areas of the plurality of gas blowing apertures (2) should preferably be limited to up to 20% relative to the area of the upper end face of the plug body (1).

REFERENCE TO PATENTS, APPLICATIONS AND PUBLICATIONS PERTINENT TO THE INVENTION

As far as we know, there is available the following prior art document pertinent to the present invention: U.S. Patent No. 4,266,970 granted on May 12, 1981.

The contents of the prior art disclosed in the above-mentioned prior art document will be discussed hereafter under the heading of the "BACKGROUND OF THE INVENTION."

BACKGROUND OF THE INVENTION

(FIELD OF THE INVENTION)

The present invention relates to a plug for a molten metal refining vessel, and more particularly, to a plug to be releasably attached to an opening provided in a wall of a molten metal refining vessel such as a ladle, and provided with a plurality of gas blowing apertures for blowing a refining gas into a molten metal received in the refining vessel.

(RELATED ART STATEMENT)

Refining of molten metal received in a metal refining vessel comprises in general blowing a refining gas into the molten metal in the metal refining vessel.

For the purpose of conducting such a refining, a plug through which a refining gas is allowed to pass, is releasably attached to an opening provided in a bottom wall or a side wall of the molten metal refining vessel.

It is the conventional practice to use a porous plug to serve as such a plug. The porous plug is characterized by the property of allowing a gas to pass therethrough, but not a molten metal. By using the porous plug, therefore, it is possible to blow a refining gas through the porous plug into a molten metal received in the metal refining vessel, and the molten metal never flows out through the porous plug even upon discontinuation of the gas blowing.

The porous plug has however the following drawbacks:

(1) Since the porous plug comprises a porous refractory and has a very high porosity, the porous plug is poor in strength and cannot therefore withstand service for a long period of time;

(2) This leads to the necessity of frequently replacing the porous plug;

(3) Porosity of the porous plug, i.e., permeability thereof largely varies with such manufacturing conditions as the particle size of a raw material and the firing temperature;

(4) In order to manufacture a porous plug permitting a stable gas blowing, therefore, it is necessary to strictly control the above-mentioned manufacturing conditions, this resulting in the increase in the manufacturing cost; and

(5) It is impossible to blow a gas in a large quantity through the porous plug into a molten metal received in a metal refining vessel.

The U.S. Patent No. 4,266,970 granted on May 12, 1981 discloses a plug for a molten metal refining vessel, which comprises:

a plug body to be releasably attached to an opening provided in a bottom wall of a molten metal refining vessel from the outside of said bottom wall, said plug body comprising a non-porous refractory such as alumina ($Al_2O_3$) having a porosity of up to 20%; and

a gas blowing aperture formed on said plug body and running through said plug body in the axial direction thereof (hereinafter referred to as the "prior art").

According to the plug of the prior art, it is possible to solve the above-mentioned drawbacks involved in the porous plug.

However, the gas blowing aperture of the plug of the prior art is a circular aperture, and has a diameter of at least 0.5 mm. When refining a molten metal, particularly, a molten stainless steel or a molten extra-low carbon steel by means of the plug of the prior art, therefore, the molten steel may penetrate into the gas blowing aperture of the plug to cause the clogging of the gas blowing aperture. In order to prevent such a clogging, it is conceivable to reduce the diameter of the gas blowing aperture of the plug. In this case, however, it is necessary to largely increase the number of gas blowing apertures of the plug in order to ensure a prescribed amount of the blown gas, and as a result, the plug structure becomes more complicated and the manufacturing cost tends to become accordingly higher.

Under such circumstances, there is a strong demand for the development of a plug for a molten metal refining vessel, which solves the drawbacks involved in the porous plug, does not cause the clogging of a gas blowing aperture even when refining a molten stainless steel or a molten extra-low carbon steel, and ensures a low manufacturing cost, but such a plug has not as yet been proposed.

## SUMMARY OF THE INVENTION

An object of the present invention is therefore to provide a plug for a molten metal refining vessel, which solves the drawbacks involved in the porous plug, does not cause the clogging of a gas blowing aperture even when refining a molten stainless steel or a molten extra-low carbon steel, and ensures a low manufacturing cost.

In accordance with one of the features of the present invention, there is provided a plug for a molten metal refining vessel, which comprises:

a plug body to be releasably attached to an opening provided in a wall of a molten metal refining vessel, said plug body comprising a non-porous refractory with a porosity of up to 20%; and

a plurality of gas blowing apertures formed in said plug body and running through said plug body in the axial direction thereof, each of said plurality of gas blowing apertures comprising a Slit, said slit having substantially a rectangular cross-sectional shape, and a shorter side of said slit having a length within a range of from 0.08 to 0.25 mm.

## BRIEF DESCRIPTION OF THE DRAWINGS

Fig. 1 is a schematic bottom view illustrating a first embodiment of the plug for a molten metal refining vessel of the present invention;

Fig. 2 is a schematic longitudinal sectional view illustrating the state in which a steel shell having a gas supply pipe is attached to the plug for a molten metal refining vessel of the first embodiment of the present invention shown in Fig. 1;

Fig. 3 is a schematic bottom view illustrating a second embodiment of the plug for a molten metal refining vessel of the present invention; and

Fig. 4 is a schematic bottom view illustrating a third embodiment of the plug for a molten metal refining vessel of the present invention.

## DETAILED DESCRIPTION OF THE PREFERRED EMBODIMENTS

From the above-mentioned point of view, extensive studies were carried out to develop a plug for a molten metal refining vessel, which solves the drawbacks involved in the porous plug, does not cause the clogging of a gas blowing aperture even when refining a molten stainless steel or a molten extra-low carbon steel, and ensures a low manufacturing cost.

As a result, the following findings were obtained: it is possible to provide a plug for a molten metal refining vessel, which solves the drawbacks involved in the porous plug, does not cause the clogging of a gas blowing aperture even when refining a molten stainless steel or a molten extra-low carbon steel, and ensures a low manufacturing cost; by forming a plug body, which is releasably attached to an opening provided in a wall of a molten metal refining vessel, from a non-porous refractory with a porosity of up to 20%; by forming, in the plug body, a plurality of gas blowing apertures which run through the plug body in the axial direction thereof; by forming each of the plurality of gas blowing apertures into the form of a slit which has substantially a rectangular cross-sectional shape; and by limiting a length of a shorter side of the slit within a range of from 0.08 to 0.25 mm.

The present invention was made on the basis of the above-mentioned findings. The plug for a molten metal refining vessel of the present invention is now described further in detail with reference to the drawings.

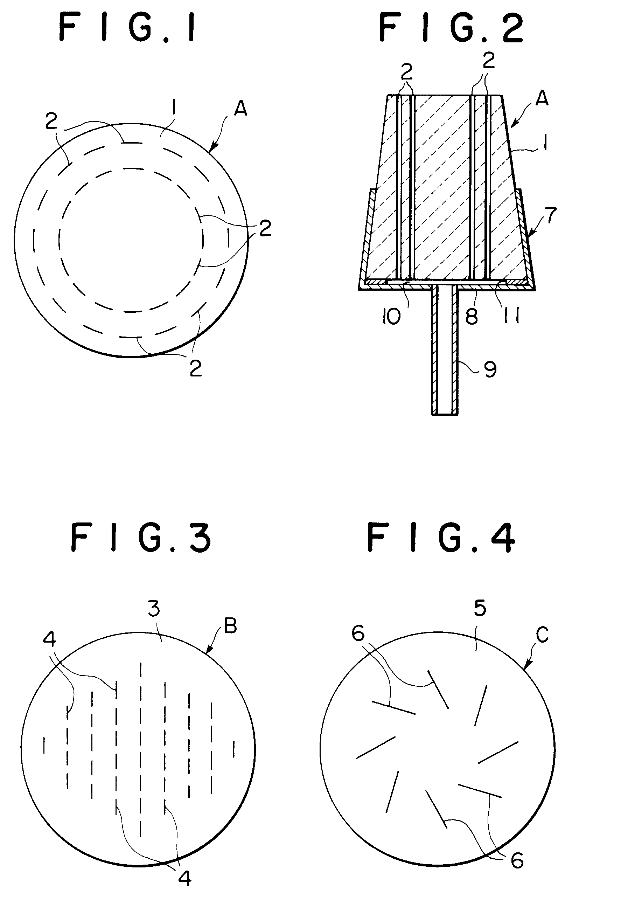

Fig. 1 is a schematic bottom view illustrating a first embodiment of the plug for a molten metal refining vessel of the present invention, and Fig. 2 is a schematic longitudinal sectional view illustrating the state in which a steel shell having a gas supply pipe is attached to the plug for a molten metal refining vessel of the first embodiment of the present invention shown in Fig. 1.

A plug A for a molten metal refining vessel of the first embodiment of the present invention comprises a plug body 1 and a plurality of gas blowing apertures 2, which are formed in the plug body 1, and run through the plug body 1 in the axial direction thereof.

The plug body 1 of the plug A is formed from a non-porous refractory having a porosity of up to 20% into a frustoconical shape. As such a refractory, alumina ($Al_2O_3$) is used for example.

Each of the plurality of gas blowing apertures 2 comprises a slit. Each of the slit-shaped gas blowing

EP 0 525 591 A1

apertures 2 has substantially a rectangular shape. With a length of a shorter side of the slit-shaped gas blowing aperture 2 of over 0,25 mm, particularly when refining a molten stainless steel or a molten extra-low carbon steel, the molten steel tends to easily penetrate into the slit-shaped gas blowing aperture 2, thus causing the clogging of the plug A. With a length of the shorter side of the slit-shaped gas blowing aperture 2 of under 0.08 mm, on the other hand, it is necessary to form numerous slit-shaped gas blowing apertures 2 in order to ensure a prescribed amount of blown gas, this resulting in a more complicated structure of the plug A, hence leading to a higher manufacturing cost. It is furthermore difficult to efficiently form a plurality of slit-shaped gas blowing apertures 2 each having a length of the shorter side thereof of under 0.08 mm on the plug body 1. The length of the shorter side of each of the slit-shaped gas blowing apertures 2 should therefore be limited within a range of from 0.08 to 0.25 mm.

The length of a longer side of each of the slit-shaped gas blowing apertures 2 is determined in response to such factors as the size of the molten metal refining vessel, the dimensions of the plug A, the kind of molten metal and the flow rate of the gas to be blown into the molten metal. When refining a molten metal with the use of the plug A of the present invention in the application of the conventional method, it is desirable to determine the length of the longer side of each of the slit-shaped gas blowing apertures 2 so that each slit-shaped gas blowing aperture 2 has a cross-sectional area of at least 2 $mm^2$. In addition, it is desirable to limit the total amount of the cross-sectional areas of the plurality of gas blowing apertures 2 to up to 20% relative to the area of the upper end surface of the plug body 1, thereby preventing the decrease in strength of the plug A.

The above-mentioned plurality of slit-shaped gas blowing apertures 2 are formed in series at prescribed intervals along two concentric circles, for example as shown in Fig. 1, on the cross-sectional plane of the plug body 1.

Various methods are available for the manufacture of the plug A of the first embodiment of the present invention. One of such methods, for example, comprises the following steps: arranging a plurality of flammable bands made of a material such as paper at prescribed positions in a mold for forming a plug A, which positions correspond to those of a plurality of slit-shaped gas blowing apertures 2; pouring a slurry-like mixture of refractories into the mold; heating the mold into which the slurry-like mixture has been poured to a high temperature to fire the slurry-type mixture; and removing ash resulting from combustion of the bands, thereby manufacturing the plug A in which the plurality of slit-shaped gas blowing apertures 2 are formed in the plug body 1 thereof.

A steel shell 7 having a gas supply pipe 9 is attached, as shown in Fig. 2, to a lower portion of the plug A of the above-mentioned first embodiment of the present invention. A metal ring 11 is arranged between a lower end of the plug A and a bottom wall 8 of the steel shell 7, whereby a space 10 is formed between the lower end of the plug A and the bottom wall 8 of the steel shell 7, thus causing the gas supply pipe 9 to communicate with the plurality of slit-shaped gas blowing apertures 2.

The plug A, to the lower portion of which the steel shell 7 having the gas supply pipe 9 has been attached, is inserted into an opening formed in a bottom wall or a side wall of a molten metal refining vessel (not shown), and the gas supply pipe 9 is connected to a gas source (not shown). A refining gas from the gas source flows therefore through the gas supply pipe 9, the space 10 and the plurality of slit-shaped gas blowing apertures 2, and is blown into a molten metal received in the metal refining vessel.

Fig. 3 is a schematic bottom view illustrating a second embodiment of the plug for a molten metal refining vessel of the present invention.

A plug B for a molten metal refining vessel of the second embodiment of the present invention comprises, as in the above-mentioned plug A of the first embodiment of the present invention, a plug body 3 and a plurality of slit-shaped gas blowing apertures 4 which are formed in the plug body 3 and run through the plug body 3 in the axial direction thereof.

The plug B of the second embodiment of the present invention is identical with the plug A of the first embodiment of the present invention except that the plurality of slit-shaped gas blowing apertures 4 are formed, as shown in Fig. 3, in series at prescribed intervals along a plurality of straight lines parallel with each other on the cross-sectional plane of the plug body 3.

The plug B of the second embodiment of the present invention is used in the same manner as in the plug A of the first embodiment of the present invention. Description of the method for using the plug B of the second embodiment of the present invention is therefore omitted here.

Fig. 4 is a schematic bottom view illustrating a third embodiment of the plug for a molten metal refining vessel of the present invention.

A plug C for a molten metal refining vessel of the third embodiment of the present invention comprises, as in the above-mentioned plug A of the first embodiment of the present invention, a plug body 5 and a plurality of slit-shaped gas blowing apertures 6 which are formed in the plug body 5 and run through the

4

plug body 5 in the axial direction thereof.

The plug C of the third embodiment of the present invention is identical with the plug A of the first embodiment of the present invention except that the plurality of slit-shaped gas blowing apertures 6 are formed, as shown in Fig. 4, substantially radially on the cross-sectional plane of the plug body 5.

The plug C of the third embodiment of the present invention is used in the same manner as in the plug A of the first embodiment of the present invention. Description of the method for using the plug C of the third embodiment of the present invention is therefore omitted here.

Now, the plug for a molten metal refining vessel of the present invention is described further in detail by means of an example while comparing with an example for comparison.

EXAMPLE

Samples of the plug A of the first embodiment of the present invention as shown in Figs. 1 and 2 (hereinafter referred to as the "samples of the invention") Nos. 1 to 5 were prepared. Each of the samples of the invention Nos. 1 to 5 contained 97 wt.% alumina ($Al_2O_3$) and had a frustoconical shape with the following dimensions:

| (1) Diameter of the upper end face | 100 mm, |
| (2) Diameter of the lower end face | 170 mm, and |
| (3) Height | 350 mm. |

Each of the samples of the invention Nos. 1 to 5 had a porosity of 17.5%.

In each of the samples of the invention Nos. 1 to 5, 16 slit-shaped gas blowing apertures 2 were formed in series at prescribed intervals along a first inner concentric circle having a diameter of 65 mm on the cross-sectional plane of the plug body 1, and another 16 slit-shaped gas blowing apertures 2 were formed in series at prescribed intervals along a second outer concentric circle having a diameter of 85 mm.

The lengths of the shorter and the longer sides of each of the slit-shaped gas blowing apertures 2 of the samples of the invention Nos. 1 to 5 are shown in Table 1.

Table 1

| | No. | Slit-shaped gas blowing aperture | |
| | | Length of shorter side (mm) | Length of longer side (mm) |
|---|---|---|---|
| Sample of the invention | 1 | 0.08 | 10 |
| | 2 | 0.10 | 10 |
| | 3 | 0.15 | 10 |
| | 4 | 0.20 | 10 |
| | 5 | 0.25 | 10 |
| Sample for comparison | 1 | 0.26 | 10 |
| | 2 | 0.30 | 10 |

For comparison purposes, samples outside the scope of the present invention (hereinafter referred to as the "Samples for comparison") Nos. 1 and 2 were prepared, which were identical with the samples of the invention Nos. 1 to 5 except that the shorter side of each of the slit-shaped gas blowing apertures had a larger length outside the scope of the present invention.

The lengths of the shorter and the longer sides of each of the slit-shaped gas blowing apertures of the samples for comparison Nos. 1 and 2 are also shown in Table 1.

A steel shell 7 having a gas supply pipe 9 as shown in Fig. 2 was attached to each of the samples of the invention Nos. 1 to 5 and the samples for comparison Nos. 1 and 2, and the thus prepared assembly was attached to an opening provided in a bottom wall of a ladle as a molten metal refining vessel. Then, a refining gas was blown through each sample into a molten stainless steel received in the ladle to effect the refining of the molten stainless steel, i.e., the adjustment of the chemical composition thereof. Argon gas was employed as the gas to be blown into the molten stainless steel.

The flow rate of argon gas per minute, which could be blown through each of the samples of the invention Nos. 1 to 5 and the samples for comparison Nos. 1 and 2 into the molten stainless steel received in the ladle, is shown in Table 2.

Table  2

| | No. | Flow rate of argon gas (ℓ/minute) | Presence of clogging |
|---|---|---|---|
| Sample of the invention | 1 | 120 | None |
| | 2 | 160 | None |
| | 3 | 240 | None |
| | 4 | 320 | None |
| | 5 | 400 | Almost none |
| Sample for comparison | 1 | 420 | Some |
| | 2 | 480 | Present |

After the completion of the above-mentioned blowing of argon gas, the presence of clogging of the gas blowing apertures formed in the plug body was investigated for each of the samples of the invention Nos. 1 to 5 and the samples for comparison Nos. 1 and 2. The results are also shown in Table 2.

In the samples of the invention Nos. 1 to 5, as is clear from Table 2, it was possible to ensure a sufficient volume of argon gas blown, and in the samples of the invention Nos. 1 to 4, furthermore, no clogging of the gas blowing apertures was observed. In the sample of the invention No. 5, although a very slight clogging of the gas blowing apertures was observed, the ratio of the total cross-sectional area of portions of the gas blowing apertures clogged up by the molten steel to the total cross-sectional area of the gas blowing apertures was only about 10%.

It was experimentally demonstrated that, in order to achieve a flow rate of argon gas of 400/minute as in the case of the sample of the invention No. 5, with the use of the conventional plug having the gas blowing apertures comprising circular apertures with a diameter of 0.6 mm, it was necessary to form 160 such gas blowing apertures.

In the samples for comparison Nos. 1 and 2, in contrast, while it was possible to ensure a sufficient volume of argon gas blown, clogging of the gas blowing apertures was observed to a certain extent in the sample for comparison No. 1, namely the ratio of the total cross-sectional area of portions of the gas blowing apertures clogged up by the molten steel to the total cross-sectional area of the gas blowing apertures was about 20%. In the sample for comparison No. 2, a serious clogging of the gas blowing apertures was observed, namely, the ratio of the total cross-sectional area of portions of the gas blowing apertures clogged up by the molten steel to the total cross-sectional area of the gas blowing apertures was

6

as large as 50%.

According to the present invention, as described above in detail, it is possible to provide a plug for a molten metal refining vessel, which solves the drawbacks involved in the porous plug, does not cause the clogging of a gas blowing aperture even when refining a molten stainless steel or a molten extra-low carbon steel, and ensures a low manufacturing cost, thus providing many industrially useful effects.

**Claims**

1.  A plug for a molten metal refining vessel, which comprises:

    a plug body to be releasably attached to an opening provided in a wall of a molten metal refining vessel, said plug body comprising a non-porous refractory with a porosity of up to 20%; and

    a plurality of gas blowing apertures formed in said plug body and running through said plug body in the axial direction thereof, each of said plurality of gas blowing apertures comprising a slit, said slit having substantially a rectangular cross-sectional shape, and a shorter side of said slit having a length within a range of from 0.08 to 0.25 mm.

2.  A plug as claimed in Claim 1, wherein:

    said plug body (1) has a frustoconical shape, and said plurality of gas blowing apertures (2) are formed in series at prescribed intervals along at least one concentric circle on the cross-sectional plane of said plug body (1).

3.  A plug as claimed in Claim 1, wherein:

    said plug body (3) has a frustoconical shape, and said plurality of gas blowing apertures (4) are formed in series at prescribed intervals along a plurality of straight lines parallel with each other on the cross-sectional plane of said plug body (3).

4.  A plug as claimed in Claim 1, wherein:

    said plug body (5) has a frustoconical shape, and said plurality of gas blowing apertures (6) are formed substantially radially on the cross-sectional plane of said plug body (5).

5.  A plug as claimed in any one of Claims 2 to 4, wherein:

    each of said plurality gas blowing apertures (2, 4 or 6) has a cross-sectional area of at least 2 mm$^2$, and the total amount of the cross-sectional areas of said plurality of gas blowing apertures (2, 4 or 6) is up to 20% relative to the area of the upper end face of said plug body (1, 3 or 5).

# F I G . 1

# F I G . 2

# F I G . 3

# F I G . 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C-3 907 500 (RADEX-HERAKLITH) *figures 1-3;col.1,lines 6-11;col.4,lines 21-25 and 57-61;col.5,lines 7-59,col.6,lines 13-30* | 1,2,5 | C21C7/072 C04B38/06 F27D3/16 B22D1/00 |
| Y |  | 3,4 | |
| Y | US-A-3 539 667 (N.N.TAKASAGO) * column 3, line 54 - line 63; claim 1; figures 1-9 * | 3 | |
| Y | EP-A-0 311 785 (PA-HA-GE-HÜTTENBEDARF GMBH&CO,K.G.) * claim 8; figure 2 * | 4 | |
| A | RADEX-RUNDSCHAU no. 1, 1987, GRAEFELFING,DE pages 288 - 302 , XP000106570 PAUL ET AL. 'Betriebserfahrungen mit Gasspülsteinen mit gerichteter Porosität bei den Badischen Stahlwerken AG' * page 293, line 5; figure 3 * | 1 | |
| A | DE-A-3 820 611 (BURBACH & BENDER) | | |
| A | DE-A-1 646 424 (BADISCHE ANILIN-&SODA-FABRIK) | | |
| A | EP-A-0 146 079 (ARBED) | | |
| A,D A | US-A-4 266 970 (IWAOKA ET AL) & FR-A-2 444 718 (KAWASAKI) | | |

TECHNICAL FIELDS SEARCHED (Int. Cl.5)

C21C
C04B
B22D
F27D

The present search report has been drawn up for all claims

| Place of search | Date of completion of the search | Examiner |
|---|---|---|
| THE HAGUE | 20 NOVEMBER 1992 | OBERWALLENEY R.P. |

EPO FORM 1503 03.82 (P0401)